# EUROPÄISCHE PATENTSCHRIFT

(11) **EP 0 906 601 B1**
(45) Veröffentlichungstag und Bekanntmachung des Hinweises auf die Patenterteilung: **10.04.2002**
(21) Anmeldenummer: 97923830.0
(22) Anmeldetag: 16.05.1997
(51) Int. Cl.: G07B 15/00, G07F 7/08

(54) **VERFAHREN ZUR DURCHFÜHRUNG EINES BUCHUNGSVORGANGES**
PROCESS FOR CARRYING OUT AN ACCOUNTING OPERATION
PROCEDE D'EXECUTION D'UNE OPERATION COMPTABLE

(30) Priorität: 20.06.1996 DE 19624602
(43) Veröffentlichungstag der Anmeldung: 07.04.1999
(73) Patentinhaber: ROBERT BOSCH GMBH, 70442 Stuttgart (DE)
(72) Erfinder: FISCHER, Hans-Jürgen, D-31141 Hildesheim (DE); PLUMEIER, Jörg, D-38228 Salzgitter (DE)
(86) Internationale Anmeldenummer: DE9700995
(87) Internationale Veröffentlichungsnummer: WO9749068

(56) Entgegenhaltungen:
- EP-A- 0 401 192
- EP-A- 0 425 961
- EP-A- 0 637 002
- WO-A-95/10147
- WO-A-96/11452
- DE-A- 4 119 924
- DE-U- 9 421 565
- US-A- 5 310 999
- TETSUSAKI K: "HIGH SECURITY ELECTRONIC TOLL AND TRAFFIC MANAGEMENT AND ROAD PRICING SYSTEM USING ENCRYPTED MESSAGES AND PERSONAL IDENTITY NUMBER" PROCEEDINGS OF THE VEHICLE NAVIGATION AND INFORMATION SYSTEMS CONFERENCE, YOKOHAMA, AUG. 31 - SEPT. 2, 1994, 31.August 1994, INSTITUTE OF ELECTRICAL AND ELECTRONICS ENGINEERS, Seiten 695-698, XP000641366

## Beschreibung

Die Erfindung betrifft ein Verfahren zur Durchführung eines Buchungsvorganges auf einem mobilen, intelligenten Speicher, insbesondere einer Chipkarte, mit Hilfe eines Endgeräts, das drahtlos mit einem Rechner, vorzugsweise über Rechnerstationen, gesichert kommuniziert, wobei eine gegenseitige dynamische Authentizitätsprüfung zwischen Rechner bzw. Endgerät und Speicher unter Verwendung eines sich ständig ändernden Datenwortes vorgenommen und die Abbuchungsinformation vom Rechner oder Endgerät generiert und vom Speicher verarbeitet und quittiert wird, woraufhin das Endgerät ein Bestätigungssignal für die Durchführung des Buchungsvorganges zum Rechner leitet und ggfs. ein Anerkennungssignal für die getätigte Abbuchung erhält.

Ein solches Verfahren ist aus DE-U-9 421 565 bekannt.

Eine wichtige Anwendung eines derartigen Verfahrens besteht in der automatischen Gebührenerhebung im Straßenverkehr durch eine drahtlose Kommunikation zwischen einer straßenseitigen Einrichtung (Rechnerstation mit Funkbake - Roadside System, RSS) und einer fahrzeugseitigen Ausrüstung (On-Board-Unit, OBU, mit Chipkarte, ICC). Das im Fahrzeug befindliche, mit einer Chipkarte bestückbare Endgerät (OBU) wird in einer bekannten Anordnung als Transponder ausgeführt. Die OBU entnimmt dabei dem empfangenen Signal der Funkbake des RSS die erforderliche Energie und sendet an die Funkbake ein mit einem Datenstrom moduliertes Signal zurück.

Es sind zahlreiche Buchungssysteme mit Chipkarten bekannt, bei denen der Buchungsvorgang gesichert durch eine gegenseitige Authentizitätsprüfung zwischen Endgerät und Chipkarte abläuft. Dabei wird zunächst vom Endgerät ein Buchungssignal erzeugt, durch das die Buchungsapplikation auf der Chipkarte selektiert wird. Nach Erhalt der Bestätigung der vorgenommenen Selektion durch die Chipkarte generiert das Endgeräte eine Zufallszahl und überträgt diese auf die Chipkarte. Die Chipkarte bildet mit der abgespeicherten Signatur unter Verwendung der Zufallszahl eine Kennung, die auf das Endgerät übertragen wird. Das Endgerät extrahiert aus dem Signal die Signatur der Chipkarte und kann somit erkennen, daß die Chipkarte für den Betrieb mit dem jeweiligen Endgerät autorisiert ist. Zur umgekehrten Authentizitätsprüfung generiert nunmehr die Chipkarte eine Zusatzzahl und überträgt diese auf das Endgerät. Der mit dem Endgerät kommunizierende Rechner bildet mit der Zufallszahl und einer eigenen Signatur eine Kennung, die von der Chipkarte empfangen und überprüft wird. Nachdem nunmehr die gegenseitige Authentizität festgestellt worden ist, wird von dem Rechner über das Endgerät der Börsenstand der Chipkarte abgefragt. Aus den erhaltenen Daten wird ein neuer Börsenstand berechnet und über ein Schreibsignal in die Chipkarte eingelesen. Der Einlesevorgang wird von der Chipkarte quittiert und das Quittungssignal auf den Rechner übertragen. Ggfs. veranlaßt das Gerät ein erneutes Auslesen des nunmehr aktuellen Börsenstandes, um diesen mit dem errechneten Börsenstand zu vergleichen.

Dieses Buchungsverfahren setzt somit mindestens 6 Übertragungen in beiden Richtungen voraus. Der Buchungsvorgang dauert dabei mehrere 100 ms, was im allgemeinen unkritisch ist, da regelmäßig genügend Zeit zur Verfügung steht und die gegenseitigen Übertragungen in der Zeitspanne nicht durch Unterbrechungen gefährdet sind.

Eine völlig andere Situation ergibt sich jedoch für manche Anwendungen, insbesondere für die Gebührenerfassung bei schnellfahrenden Fahrzeugen. Die Mikrowellen-Funkverbindung zwischen dem Fahrzeuggerät und der straßenseitigen stationären Funkbake kann unterbrochen werden und muß darüber hinaus in einer sehr geringen Zeitspanne abgeschlossen sein. Die gesamte Zahlungstransaktion muß in einem kurzen Zeitrahmen zwischen 50 und 100 ms abgeschlossen sein. Darüber hinaus ist die Kommunikation zwischen dem Endgerät und der Chipkarte nur möglich, wenn eine Funkverbindung mit der Funkbake besteht, wenn das Endgerät als Transponder ausgeführt ist und daher die Energieversorgung aus den empfangenen Signalen der Funkbake entnimmt.

Hieraus resultiert, daß auch die Kommunikation zwischen Endgerät und Chipkarte während des Abbuchungsvorganges anfällig gegenüber Störungen der Funkverbindung ist. Für einen Hochgeschwindigkeits-Buchungsvorgang ist es daher von eminenter Bedeutung, daß die Kommunikation zwischen Endgerät und Chipkarte in einem möglichst kurzen Zeitraum erfolgt, da eine Unterbrechung des Kommunikationsablaufs entweder erfordert, daß die Wiederaufnahme der Kommunikation am gleichen Endgerät erfolgt oder daß alle Endgeräte miteinander vernetzt sind. Beide Voraussetzungen sind beispielsweise bei Gebührenerfassungssystemen für den öffentlichen Personennahverkehr regelmäßig nicht erfüllt.

Die vorliegende Erfindung geht somit von der Problemstellung aus, ein Verfahren zur Durchführung eines Buchungsvorganges der eingangs erwähnten Art anzugeben, das eine Hochgeschwindigkeits-Abwicklung erlaubt und eine nur kleine gegen Unterbrechungen empfindliche Zeitspanne aufweist.

Zur Lösung dieser Problemstellung ist ein Verfahren der eingangs erwähnten Art dadurch gekennzeichnet, daß vor einer gegen Unterbrechungen empfindlichen Zeitspanne ein zur dynamischen Authentizitätsprüfung generiertes erstes Datenwort vom Speicher auf das Endgerät übertragen wird,
daß während der gegen Unterbrechungen empfindlichen Zeitspanne vom Endgerät auf den Speicher ein einziges Signal übertragen wird, das ein Buchungsauslösesignal, einen Buchungsdatensatz, eine unter Verwendung des vorher übertragenen ersten Datenworts generierte Kennung und ein zweites vom Rechner oder Endgerät generiertes zweites Datenwort enthält, woraufhin der Speicher die Kennung prüft, die Buchung gemäß dem Buchungsdatensatz vornimmt, eine eigene Kennung unter Verwendung des zweiten Datenworts generiert und vom Speicher ein Betätigungssignal für die vorgenommene Buchung zusammen mit seiner generierten Kennung über das Endgerät auf den Rechner übertragen wird, und daß die Bestätigung für die Durchführung der Buchung vom Endgerät auf den Rechner wahlweise innerhalb oder außerhalb der gegen Unterbrechungen empfindlichen Zeitspanne übertragen wird.

Die Erfindung beruht darauf, daß die bisher übliche sequentielle Kommunikation zur gegenseitigen Authentizitätsprüfung, zur Selektion der Applikation und zur Durchführung des Buchungsvorganges in ein einziges Kommandosignal zusammenfaßbar sind. Demgemäß reduziert sich die während der gegen Unterbrechungen empfindlichen Zeitspanne durchgeführte Kommunikation auf ein vom Rechner bzw. Endgerät auf die Chipkarte übertragenes Signal und ein von der Chipkarte zum Rechner bzw. Endgerät zurückübertragenes Signal, das nach den Verarbeitungsvorgängen auf der Chipkarte erzeugt wird. Voraussetzung für diese Kommunikation ist die vorherige Übertragung eines ersten Datenworts vom Speicher auf das Endgerät, wobei das erste Datenwort eine Zeitangabe oder eine Zufallszahl sein kann. Die Komplettierung der Abbuchung kann ferner außerhalb der gegen Unterbrechungen empfindlichen Zeitspanne durch die später erfolgte Bestätigung für die Durchführung der Buchung vom Endgerät an den Rechner erfolgen. Die gegenseitige Authentizitätsprüfung wird regelmäßig zwischen Rechner und Speicher unter Zwischenschaltung des Endgerätes erfolgen. Es ist aber auch denkbar, eine Authentizitätsprüfung nur zwischen Endgerät und Speicher vorzunehmen und lediglich das Ergebnis der Prüfung dem Rechner explizit oder implizit mitzuteilen.

In einer bevorzugten Ausführungsform der Erfindung enthält der Buchungsdatensatz zugleich einen Transaktionsdatensatz zur Erstellung eines Logbucheintrags im Speicher. Auf diese Weise wird im Speicher ein komplettes Logbuch erzeugt, das alle Vorgänge und Gebührenhöhen dokumentiert.

Zweckmäßigerweise wird der Transaktionsdatensatz im Speicher durch das außerhalb der gegen Unterbrechungen empfindlichen Zeitspanne übertragene Anerkennungssignal vom Rechner ergänzt. Ohne das Anerkennungssignal ist der Transaktionsdatensatz nur vorläufig.

Die vorzugsweise als Speicher verwendeten Chipkarten enthalten häufig nichtflüchtige Speicher (EEPROM), die physikalisch seitenweise organisiert sind. Der Schreibvorgang in einem derartigen Speicher ist zeitaufwendig und jeweils nur für eine Seite möglich. Über der physikalischen Ebene liegt eine logische Organisation in Dateien durch das Chipkarten-Betriebssystem. Die Datei, die die Daten enthält, die von einer Buchung betroffen sind, also üblicherweise eine Datei für eine Geldbörse, ist regelmäßig getrennt von der Logbuch-Datei angelegt. Ein Zugriff auf die Geldbörsen-Datei und die Logbuch-Datei erfordert daher herkömmlich mindestens zwei zeitaufwendige physikalische Schreibzugriffe auf den nichtflüchtigen Speicher. Für den erfindungsgemäßen Zweck einer Hochgeschwindigkeits-Abbuchung ist es daher außerordentlich vorteilhaft, wenn in einer Ausgestaltung des erfindungsgemäßen Verfahrens der (vorläufige) Transaktionsdatensatz auf der Seite abgelegt wird, auf der sich die der Buchung unterliegenden Daten befinden und wenn die Übertragung auf eine Logbuch-Datei außerhalb der gegen Unterbrechungen empfindlichen Zeitspanne erfolgt. Um sicherzustellen, daß diese Übertragung auf die Logbuch-Datei immer erfolgt, kann ein Zustandsautomat auf der Chipkarte implementiert werden, der eine erneute Abbuchung erst nach erfolgreicher Übertragung in die Logbuch-Datei gestattet. Alternativ hierzu kann bei einer erneuten Abbuchung selbständig zuerst die Übertragung des letzten Transaktionsdatensatzes vorgenommen werden. Hiermit wäre allerdings ein Zeitnachteil verbunden.

In heutiger Technik läßt sich der zeitkritische Abbuchungsvorgang zwischen Endgerät und Speicher auf über 150.000 Baud beschleunigen.

Die Erfindung soll im folgenden anhand eines in der Zeichnung dargestellten Ausführungsbeispiels näher erläutert werden:
Es zeigen:
- Figur 1 -: eine schematische Darstellung der Kommunikation zwischen einer Funkbake, einer Rechnerstation und einem fahrenden Kraftfahrzeug, das mit einem Endgerät mit einer Chipkarte ausgestattet ist,
- Figur 2 -: eine schematische Darstellung des für eine Buchung erfindungsgemäß benötigten kompakten Kommunikationsvorgangs zwischen dem Endgerät und der Chipkarte.

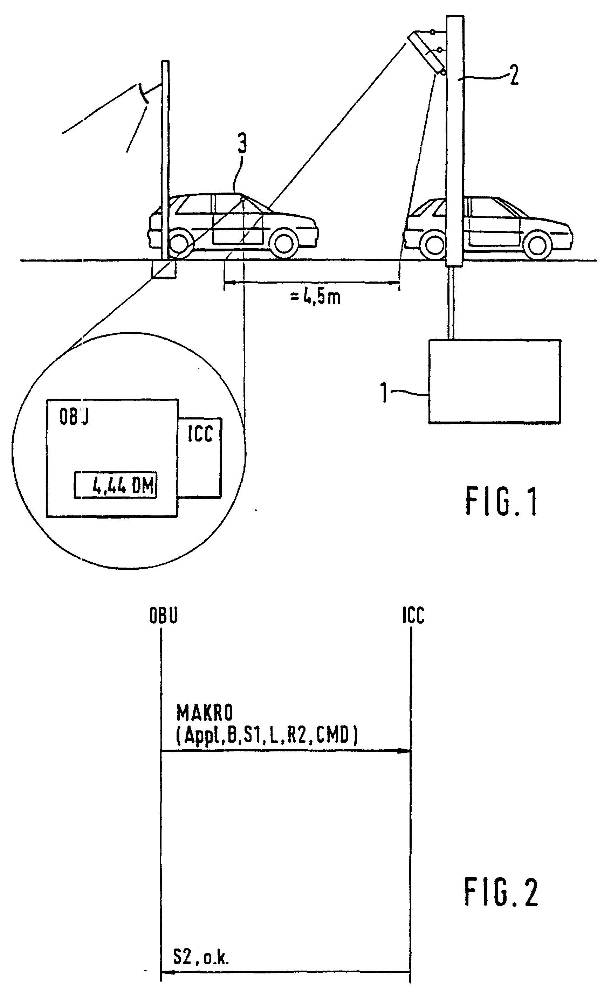

Figur 1 läßt eine straßenseitige Rechnerstation 1 mit einer Funkbake 2 erkennen, mit der eine Kommunikation mit einem fahrenden Kraftfahrzeug 3 durchgeführt wird. Hierfür ist das fahrende Kraftfahrzeug mit einem Endgerät OBU ausgestattet, dessen Gebührenguthaben bzw. -kredit auf einer Chipkarte ICC gespeichert ist.

Beim Durchfahren des Kommunikationsbereichs, der im vorliegenden Fall etwa 4,5 m beträgt soll die Straßenbenutzungsgebühr vom Guthaben auf der Chipkarte ICC abgebucht bzw. auf dem Kreditkonto der Chipkarte ICC gebucht werden.

Der hierfür erforderliche Kommunikationsablauf sieht ein Initiierungssignal der Funkbake 2 vor, auf das das Endgerät OBU mit einem "Service Request"-Signal antwortet. Daraufhin erzeugt die Funkbake 2 ein "Debit Order"-Signal, das von dem Endgerät OBU als "Debit Command" auf die Chipkarte ICC übertragen wird. Nach Durchführung der Abbuchung erzeugt die Chipkarte ein Quittungssignal "Receipt", das aufgrund eines Initiierungssignals der Funkbake 2 von dem Endgerät OBU auf die Funkbake 2 übertragen wird. Den ordnungsgemäßen Erhalt des Quittungssignals bestätigt die Funkbake 2 dann als "Acknowledge" woraufhin das Endgerät OBU das Anerkennungssignal zur Vervollständigung eines Transaktionsdatensatzes auf die Chipkarte überträgt und die Chipkarte die Daten für den nächsten "Service Request" beim Endgerät OBU bereitstellt.

Der zeitkritische Teil dieser Kommunikation liegt zwischen der Erstellung der "Debit Order" durch die Funkbake 2 bis zum Übertragen des Anerkennungssignals auf das Endgerät OBU.

Diese störanfällige Kommunikation wird innerhalb kürzester Zeit dadurch durchgeführt, daß gemäß Figur 2 von dem Endgerät OBU ein MAKRO-Signal auf die Chipkarte ICC übermittelt wird, das ein Selektionssignal für die betreffende Applikation APPL (Buchung), ein Buchungsauslösesignal CMD, den Buchungsbetrag B, die eigene Signatur S1 und eine generierte Zufallszahl R2 enthält. Vorzugsweise enthält das MAKRO-Signal ferner noch einen vorläufigen Transaktionsdatensatz L zur Erstellung einer Logbuchinformation in der Chipkarte ICC. Transaktionsdatensatz und Buchungsbetrag B bilden zusammen einen Buchungsdatensatz.

Die Signatur S1 wird dabei vorzugsweise verschlüsselt übertragen, wozu ein erstes Datenwort R1 benutzt wird, das in Form eines Zeitsignals oder einer Zufallszahl vorher von der Chipkarte ICC auf das Endgerät OBU übertragen worden ist.

Die Chipkarte ICC selektiert die Applikation gemäß APPL, prüft die Signatur S1 und den Buchungsbetrag B, berechnet und schreibt den neuen Börsenstand in der Geldbörsendatei sowie die Logbuchinformation L, um so die Buchung vorzunehmen. Ferner berechnet die Chipkarte ICC unter Verwendung des von dem Endgerät OBU generierten zweiten Datenworts R2, das ebenfalls eine Zufallszahl oder eine Zeitinformation ist, eine zweite Kennung mit Hilfe der eigenen Signatur S2.

Die Chipkarte überträgt nach Durchführung dieser Aktionen ein Quittiersignal und die zweite Kennung mit der Signatur S2 auf das Endgerät OBU. Von dem Endgerät OBU wird das Quittiersignal auf die Funkbake 2, also den Rechner 1 übertragen, der so die Authentizität der Chipkarte ICC überprüft und erkennt.

Die Komplettierung des vorläufigen Transaktionsdatensatzes in der Chipkarte ICC erfolgt durch ein Bestätigungssignal des Rechners 1 für den Empfang des Quittungssignals für die durchgeführte Buchung.

Das Anerkennungssignal des Rechners 1 kann dazu verwendet werden, in der Chipkarte eine Übertragung des vorläufig abgelegten Transaktionsdatensatzes in eine Logbuch-Datei vorzunehmen.

## Patentansprüche

1. Verfahren zur Durchführung eines Buchungsvorganges auf einem mobilen, intelligenten Speicher (ICC), insbesondere einer Chipkarte, mit Hilfe eines Endgeräts OBU, das drahtlos mit einem Rechner (1), vorzugsweise über Rechnerstationen, gesichert kommuniziert, wobei eine gegenseitige dynamische Authentizitätsprüfung zwischen Rechner (1) bzw. Endgerät (OBU) und Speicher (ICC) unter Verwendung eines sich ständig ändernden Datenworts (R1, R2) vorgenommen und die Abbuchungsinformation vom Rechner (1) oder Endgerät (OBU) generiert und vom Speicher (ICC) verarbeitet und quittiert wird, woraufhin das Endgerät (OBU) ein Bestätigungssignal für die Durchführung des Buchungsvorganges zum Rechner (1) leitet und ggfs. ein Anerkennungssignal für die getätigte Abbuchung erhält, **dadurch gekennzeichnet, daß** vor einer gegen Unterbrechungen empfindlichen Zeitspanne ein zur dynamischen Authentizitätsprüfung generiertes erstes Datenwort (R1) vom Speicher (ICC) auf das Endgerät (OBU) übertragen wird, daß während der gegen Unterbrechungen empfindlichen Zeitspanne vom Endgerät (OBU) auf den Speicher (ICC) ein einziges Signal (MAKRO) übertragen wird, das ein Buchungsauslösungssignal (CMD), einen Buchungsdatensatz (B, L), eine unter Verwendung des vorher übertragenen ersten Datenworts (R1) generierte Kennung (S1) und ein zweites, vom Rechner (1) oder Endgerät (OBU) generiertes Datenwort (R2) enthält, woraufhin der Speicher (ICC) die Kennung (S1) prüft, die Buchung gemäß dem Buchungsdatensatz (B, L), vornimmt, eine eigene Kennung (S2) unter Verwendung des zweiten Datenworts (R2) generiert und vom Speicher (ICC) ein Bestätigungssignal für die vorgenommene Buchung zusammen mit seiner generierten Kennung (S2) über das Endgerät (OBU) auf den Rechner (1) übertragen wird, und daß die Bestätigung für die Durchführung der Buchung vom Endgerät (OBU) auf den Rechner (1) wahlweise innerhalb oder außerhalb der gegen Unterbrechungen empfindlichen Zeitspanne übertragen wird.

2. Verfahren nach Anspruch 1, **dadurch gekennzeichnet, daß** der Buchungsdatensatz (B, L) einen Transaktionsdatensatz (L) zur Erstellung eines Logbuch-Eintrags im Speicher (ICC) umfaßt.

3. Verfahren nach Anspruch 1 oder 2, **dadurch gekennzeichnet, daß** der Transaktionsdatensatz (L) im Speicher (ICC) durch das außerhalb der gegen Unterbrechungen empfindlichen Zeitspanne übertragene Anerkennungssignal ergänzt wird.

4. Verfahren nach Anspruch 2 oder 3, **dadurch gekennzeichnet, daß** der Transaktionsdatensatz (L) in einem seitenweise organisierten Speicher während der gegen Unterbrechungen empfindlichen Zeitspanne vorläufig auf der Seite abgelegt wird, auf der sich die der Buchung unterliegenden Daten befinden, und daß die Übertragung auf eine Logbuch-Datei außerhalb der Zeitspanne erfolgt.

5. Verfahren nach Anspruch 4, **dadurch gekennzeichnet, daß** der Speicher (ICC) für einen Buchungsvorgang gesperrt ist, solange ein vorläufig abgelegter Transaktionsdatensatz (L) noch nicht in die Logbuch-Datei übernommen worden ist.

6. Verfahren nach einem der Ansprüche 1 bis 5 zur Abbuchung von Benutzungsentgelten.

7. Verfahren nach Anspruch 6 zur Gebührenerfassung für Kraftfahrzeuge (3).

## Claims

1. Process for carrying out an accounting operation on a mobile, intelligent memory (ICC), in particular a chip card, with the aid of a terminal device OBU which wirelessly communicates in a secured manner with a computer (1), preferably via computer stations, a reciprocal dynamic authenticity check being performed between the computer (1) or terminal device (OBU) and the memory (ICC) using a constantly changing data word (R1, R2), and the debiting information being generated by the computer (1) or terminal device (OBU) and processed and acknowledged by the memory (ICC), whereupon the terminal device (OBU) sends a confirmation signal for carrying out the accounting operation to the computer (1) and, if appropriate, receives an acknowledgement signal for the debiting conducted, **characterized in that**, before a time period sensitive to interruptions, a first data word (R1) generated for the dynamic authenticity check is transmitted from the memory (ICC) to the terminal device (OBU), **in that**, during the time period sensitive to interruptions, a single signal (MAKRO) is transmitted from the terminal device (OBU) to the memory (ICC), which signal includes an accounting initiation signal (CMD), an accounting data record (B, L), an identifier (S1), generated using the previously transmitted first data word (R1), and a second data word (R2), generated by the computer (1) or terminal device (OBU), whereupon the memory (ICC) checks the identifier (S1), performs the accounting in accordance with the accounting data record (B, L), generates an identifier (S2) of its own, using the second data word (R2), and a confirmation signal for the accounting performed is transmitted by the memory (ICC) together with its generated identifier (S2) via the terminal device (OBU) to the computer (1), and **in that** the confirmation for carrying out the accounting is transmitted by the terminal device (OBU) to the computer (1) optionally within or outside the time period sensitive to interruptions.

2. Process according to Claim 1, **characterized in that** the accounting data record (B, L) comprises a transaction data record (L) for creating a logbook entry in the memory (ICC).

3. Process according to Claim 1 or 2, **characterized in that** the transaction data record (L) in the memory (ICC) is supplemented by the acknowledgement signal transmitted outside the time period sensitive to interruptions.

4. Process according to Claim 2 or 3, **characterized in that** the transaction data record (L) is provisionally stored during the time period sensitive to interruptions in a memory organized page by page on the page on which the data on which the accounting is based are located, and **in that** the transmission to a logbook file takes place outside the time period.

5. Process according to Claim 4, **characterized in that** the memory (ICC) is blocked for an accounting operation as long as a provisionally stored transaction data record (L) has not yet been accepted into the logbook file.

6. Process according to one of Claims 1 to 5 for the debiting of fees for use.

7. Process according to Claim 6 for registering fees for motor vehicles (3).

## Revendications

1. Procédé d'exécution d'une opération comptable sur une mémoire mobile intelligente (ICC), notamment une carte à puce à l'aide d'un terminal (OBU) relié par une liaison sans fil à un calculateur (1) de préférence par des stations de calculateur, selon une communication protégée, avec contrôle réciproque dynamique d'authenticité entre le calculateur (1) ou le terminal (OBU) et la mémoire (ICC) en utilisant un mot de données (R1, R2) variant en continu, l'information comptable étant générée par le calculateur (1) ou le terminal (OBU) pour être traitée par la mémoire (ICC) et être acquittée, puis le terminal (OBU) fournissant un signal de confirmation pour l'exécution de l'opération comptable vers le calculateur (1) et le cas échéant contenant un signal de reconnaissance pour l'opération comptable exécutée,
**caractérisé en ce qu'**
avant l'intervalle de temps sensible aux interruptions, on transmet un premier mot de données (R1) généré pour le contrôle dynamique d'authenticité par la mémoire (ICC) au terminal (OBU),
pendant l'intervalle de temps sensible aux interruptions, le terminal (OBU) transmet à la mémoire (ICC) un seul signal (MAKRO) qui contient un signal de déclenchement d'opérations comptables (CMD), un jeu de données comptables (B, L), une caractéristique (S1) générée en utilisant le premier mot de données (R1) transmis précédemment et un second mot de données (R2) générés par le calculateur (1) ou le calculateur (OBU),
puis la mémoire (ICC) vérifie la caractéristique (S1) qui produit l'opération comptable selon le jeu de données comptables (B, L),
on génère une seconde caractéristique (S2) en utilisant le second mot de données (R2) et on transmet par la mémoire (ICC), un signal de confirmation pour l'opération comptable qui a été effectuée avec sa caractéristique générée (S2) au niveau du terminal (OBU) sur le calculateur (1) et,
on transmet la confirmation de l'exécution de l'opération comptable du terminal (OBU) au calculateur (1), au choix à l'intérieur ou l'extérieur de l'intervalle de temps sensible aux interruptions.

2. Procédé selon la revendication 1,
**caractérisé en ce que**
le jeu de données comptable (B, L) contient un jeu de données de transaction (L) pour établir un enregistrement de fichier journal dans la mémoire (ICC).

3. Procédé selon la revendication 1 ou 2,
**caractérisé en ce que**
le jeu de données de transaction (L) est complété dans la mémoire (ICC) par le signal de reconnaissance transmis en dehors de l'intervalle de temps sensible aux interruptions.

4. Procédé selon la revendication 2 ou 3,
**caractérisé en ce que**
le jeu de données de transaction (L) est enregistré dans une mémoire organisée page par page, de manière provisoire pendant l'intervalle de temps sensible aux interruptions, cet enregistrement se faisant la page sur laquelle se trouvent les données concernées par l'opération comptable et la transmission vers le fichier journal (L) se fait au cours de cet intervalle de temps.

5. Procédé selon la revendication 4,
**caractérisé en ce que**
la mémoire (ICC) est bloquée pour une opération comptable aussi longtemps qu'un jeu de données transitionnel (L) est enregistré provisoirement, et n'a pas encore été repris dans le fichier journal.

6. Procédé selon l'une quelconque des revendications 1 à 5, appliqué à l'exécution d'une opération comptable pour des droits d'utilisation.

7. Procédé selon la revendication 6 pour la saisie des droits de péage d'un véhicule automobile (3).
